# EUROPEAN PATENT APPLICATION

(11) **EP 3 928 964 A1**
(43) Date of publication of application: **29.12.2021**
(21) Application number: 20182029.7
(22) Date of filing: 24.06.2020
(51) Int. Cl.: B29C 70/44, B29C 43/12, B29C 43/36

(54) **METHOD OF FORMING A COMPOSITE ARTICLE**

(71) Applicant: Trioplast France SAS, 49420 Pouancé (FR)
(72) Inventor: Gilles, Anne-Laure, Pouancé (FR)
(74) Representative: AWA Sweden AB

(57) **Abstract**

The present invention provides a method of forming a moulded article. The method comprises providing a casting mould (10); sealing said casting mould (10) with a film (40) to form a space (30) within the casting mould (10); creating a vacuum in said space (30), thereby forming a vacuum space (30); introducing matrix material (50) into the formed vacuum space (30); and curing the matrix material (50) within said casting mould (10), thereby obtaining said moulded article. The film (40) comprises polyethylene at a content of 60-90 % by weight of the film, wherein the polyethylene is selected from linear low-density polyethylene (LLDPE) and low-density polyethylene (LDPE) and combinations thereof, and a barrier additive at a content of 3-20 % by weight of the film.

## Description

### Field of the invention

The present invention relates to methods of forming reinforced composite articles, in particular using infusion moulding.

### Background

Composite materials achieve the majority of their beneficial properties from a strong bond between a strong, stiff reinforcement material - usually fibers (filaments) or reinforcements with other geometrical shapes, for example, particles, platelets - and a weaker, less stiff matrix. Examples of composite materials are reinforced plastics, such as fiber-reinforced polymers. They are generally used in high performance products that need to be lightweight, yet strong, and are frequently used for product within the aerospace, flight and boat industry.

A commonly used method for producing an article of a composite material is infusion moulding, in which e.g. fiber reinforcements are placed in a mould, and a cover (typically a plastic bagging film) is placed over the top to form a vacuum-tight seal. A resin may then, facilitated by a created vacuum in the mould, flow into the structure through one or several ports to cover the fiber reinforcements. After curing, the produced article may be released from the mould.

However, there is a need in the art for improved infusion moulding processes, especially for processes with less environmental impact.

### Summary of the invention

It is an object of the present invention to at least partly overcome the problems in the prior art, and to provide a film with mechanical properties suitable for use as a silage film and which offers desirable barrier properties.

According to a first aspect of the invention, there is provided a method of forming a moulded article. The method comprises
providing a casting mould;
sealing said casting mould with a film to form a space within the casting mould;
creating a vacuum in said space, thereby forming a vacuum space;
introducing matrix material into the formed vacuum space; and
curing the matrix material within said casting mould, thereby obtaining said moulded article;
wherein the film comprises polyethylene at a content of 60-90 % by weight of the film, wherein the polyethylene is selected from linear low-density polyethylene (LLDPE) and low-density polyethylene (LDPE) and combinations thereof, and a barrier additive at a content of 3-20 % by weight of the film.

The first aspect of the invention is based on the insight that a film comprising polyethylene (PE) and a barrier additive at a content of 3-20 % by weight of the film functions as a good film for sealing a casting mould in an infusion moulding process. The barrier additive thus reduces the gas permeability of the polyethylene-based film such that the film is able to retain the created vacuum within the mould. Moreover, both the polyethylene and the barrier additive are recyclable, making the infusion moulding process more environmentally friendly. After used, the film may hence be recycled as granulates and used in the production of further films of the type disclosed herein and/or of a different type.

Commonly used films for sealing and retaining a vacuum in infusion moulding processes usually comprises polyamides (PA) and/or ethylene vinyl alcohol (EVOH), which are not recyclable, or at least very difficult to recycle. The PA or EVOH may in such films be provided in a middle layer of the film. The present invention thus provides using a film in infusion moulding with little or no amounts of PA or EVOH.

Thus, in embodiments of the first aspect, the film is free of any polyamides (PA) and/or ethylene vinyl alcohol (EVOH).

However, further layers or films than the polyethylene-based film with the barrier additive may be arranged over the casting mould. As an example, also a release film, such as a perforated release film, bleeder fabric, and/or a buffing fabric (peel ply) may be arranged over the casting mould.

In embodiments of the first aspect, the casting mould is a one-sided casting mould. Then, sealing the casting mould may comprise forming a cover over the open side of the one-sided casting mould, thereby forming said space, i.e. the space in which the vacuum is formed.

The process of the first aspect may be an infusion moulding process .Further, the moulded article formed by the method may be an article for e.g. boat industry, flight industry, car industry or space industry.

The matrix material that is introduced may be provided as liquid or fluid, such as liquid resin. The matrix material may be a polymer. In one embodiment the matrix material comprises a resin selected from a polyester resin, a vinyl ester resin and an epoxy resin. Polyester resins are unsaturated resins formed by the reaction of dibasic organic acids and polyhydric alcohols. Vinyl ester is a resin that may be produced by the esterification of an epoxy resin with an unsaturated monocarboxylic acid. Epoxy resins, also known as polyepoxides are a class of reactive prepolymers and polymers which contain epoxide groups.

The moulded article may be a composite article, such as made of fiberglass, carbon fiber or Kevlar.

In embodiments of the first aspect, the moulded article is a reinforced composite article. Then, the method may further comprise arranging reinforcement material within the casting mould before the curing of the matrix material.

Such reinforcement material may be configured for adding rigidity to the reinforced composite article, and the matrix material may thus surround and supports the reinforcement materials by maintaining their relative positions. The space formed at sealing may thus refer to the space in which the matrix material and the reinforcement material are applied and in which the composite article is to be moulded.

The reinforcement material thus impart their special mechanical and physical properties to enhance the material properties of the composite article. The reinforcement material may comprise short fiber reinforced materials and continuous fiber reinforced materials. The reinforcement material may be in the form of a sheet, which is sometimes called a laminate, such as a glassfiber sheet.

In embodiments, the reinforcement material is selected from the group consisting of glass fibers, carbon fibers, natural fibers (such as cellulose), plastic fibers metal fibers, ceramic fibers, textile fibers. The plastic fibres may be high strength polymers, polyethylene or aramide fibers, or other thermoplastic or thermosetting fibers.

As an example, the reinforcement material may be arranged within the casting mould before introducing the matrix material. Thus, the reinforcement material may be placed in the space in which the vacuum is later formed before adding the matric material. Arranging the reinforcement material within the casting mould may usually be performed before sealing the casting mould using the film.

However, as a complement or alternative, the reinforcement material may be introduced in admixture with the matrix material. This is performed after sealing the casting mould. Thus, the matrix material may be preimpregnated with the reinforcement material, such as fibres, and after introduction to the space within the mould, the matrix may be forced to be bound together using e.g. heat or a chemical reaction.

Curing the matrix within the casting mould to obtain the moulded article refers to providing a chemical reaction in which the matrix material, usually a polymer, changes from a liquid to a solid state. The chemical reaction may for example be induced by a change in temperature. The time for curing depends on the matrix material used. The matrix may comprise curing additives, including promoters, accelerators, catalysts, peroxides and hardeners, which aid in the curing of the matrix material

The film used for sealing comprises polyethylene at a content of 60-90 % by weight of the film, wherein the polyethylene is selected from linear low-density polyethylene (LLDPE) and low-density polyethylene (LDPE) and combinations thereof, and a barrier additive at a content of 3-20 % by weight of the film

As used herein, "low density" when referring to polyethylene typically refers to a density of 0.930 g/cm³ or less, such as 0.925 g/cm³ or less.

In embodiments, the low-density polyethylene (LDPE) originates from recycled polyethylene.

Advantageously, a film used in the method is readily recyclable, and the polyethylene content can be recycled in its entirety. The films according to the invention may further be free of conventional barrier materials such as, for instance, ethylene vinyl alcohol (EVOH) or polyamide, which are not easily recyclable and/or obstructs recycling of the polyethylene content of such conventional barrier films.

At least part of the polyethylene content of the film may originate from regranulated polyethylene, that is, recycled polyethylene. The regranulated polyethylene may contain a combination of linear low-density polyethylene (LLDPE) and low-density polyethylene (LDPE), and may have a density of up to 0.930 g/cm³, such as in the range of from 0.860 to 0.930 g/cm³

In embodiments, the film has a thickness in the range of from 15 to 180 µm. As an example, the film may have a thickness that is more than 70 µm, such as more than 80 µm. As an example, the film may have a thickness in the range of from 80 to 180 µm, preferably from 90 to 125 µm.

In embodiments, the film further comprises one or more additives selected from pigments, dyes, fillers, UV stabilizers, tackifiers, slip agents, nucleating agents, and processing aids.

In embodiments, the film has a density in the range of from 0.920 to 1.00 kg/m³.

In embodiments, the film has an oxygen gas transmission rate (OTR) of 250 cm³/m²/24h or less, as measured according DIN 53380-3 using air instead of oxygen gas. As an example, the film may have an OTR of 200 cm³/m²/24h or less, such as an OTR of 160 cm³/m²/24h or less, preferably an OTR of 150 cm³/m²/24h or less. A film having such OTR levels may have a thickness of about 90-150 µm, such as about 100-120 µm, such as about 110 µm.

The film may be a monolayer film or a multilayer film, and may be produced by conventional means, such as cast extrusion or blow extrusion. According to an embodiment, the polyethylene film is a coextruded multi-layer blown film comprising at least two layers. Preferably, the polyethylene film is a multi-layer film comprising at least three layers: at least one core layer arranged between two exterior layers.

Consequently, in embodiments, the film is a multilayer film. The multilayer film may comprise at least a first outer layer, a second outer layer, and a core layer arranged between said first outer layer and said second outer layer. The core layer may comprise low density polyethylene (LDPE), such as LDPE originating from regranulated polyethylene.

As an example, the multilayer film may be polyethylene-based film consisting of a first outer layer, a second outer layer, and a core layer arranged between said first outer layer and said second outer layer; wherein said outer layers comprises linear low-density polyethylene (LLDPE) and the barrier additive. The LLDPE may give the film desired mechanical properties and bubble stability.

The core layer arranged between said first outer layer and said second outer layer may comprise low density polyethylene (LDPE). Further, the core layer may also comprise the barrier additive. The low-density polyethylene (LDPE) of the core layer may originate from regranulated polyethylene. Furthermore, when using LDPE that originates from regranulates, it is advantageous to have the barrier additive in all layers since too much barrier additive in the same layer may decrease the tear resistance of a film with regranulates.

By the term "mechanical properties" or "mechanical performance" of the film is herein mainly meant the mechanical strength of the material, measured in terms of at least one of tensile strength, tear strength and puncture resistance. Tensile strength, measured as force per unit area, is defined as the maximum stress that a material can withstand while being stretched or pulled before failing or breaking. Tear strength, typically measured as force per unit length, is defined as the resistance of a material to the growth of e.g. a cut when under tension. Elongation at break is defined as the ultimate elongation (given as percentage of the initial length) of a material before it breaks under tension. Puncture resistance, typically measured as mass per unit length, is defined as the relative ability of a material to withstand a falling dart without breaking.

As an example, the film may be a multilayer film and all layers may be based on polyethylene selected from linear low-density polyethylene (LLDPE) and low-density polyethylene (LDPE) and combinations thereof.

In embodiments of the present invention, the barrier additive is a dicyclopentadiene hydrocarbon resin at a content of 3-20 % by weight of the film.

According to preferred embodiments, the dicyclopentadiene hydrocarbon resin has a softening point in the range of 100-145 °C, preferably 130- 145 °C. A dicyclopentadiene hydrocarbon resin having a softening point above 130 °C, such as between 130-145 °C, may have increased barrier properties.

In embodiments, the film comprises a dicyclopentadiene hydrocarbon resin at a content of 4.5-15 % by weight of the film, such as 5-15 % by weight of the film, such as 6-13 % by weight of the film. As an example, the dicyclopentadiene hydrocarbon resin is present at a content of 5-13 % by weight of the film.

In embodiments, the dicyclopentadiene hydrocarbon resin originates from thermal cracking of hydrocarbons, such as naphtha.

As an example, the film may comprise at least one layer containing a mixture of linear low-density polyethylene and dicyclopentadiene.

Thus, the film may be a multilayer film may comprise at least a first outer layer, a second outer layer, and a core layer arranged between said first outer layer and said second outer layer. Furthermore, at least two layers of the multilayer film may comprise the dicyclopentadiene hydrocarbon resin. As an example, all layers of the film may comprise the dicyclopentadiene hydrocarbon resin. It has been found that it is advantageous to put dicyclopentadiene in all layers since too much dicyclopentadiene in the same layer may decrease the tear resistance of the film.

Consequently, the polyethylene-based film may be a multilayer film having a three-layer structure, in which the first and second outer layers comprises LLDPE and the dicyclopentadiene hydrocarbon resin and wherein the core layer comprises the dicyclopentadiene hydrocarbon resin and LDPE that originates from regranulated polyethylene.

In embodiments, the dicyclopentadiene hydrocarbon resin is present in an amount that is less than 20% such as less than 15%, in all layers of the film. Thus, dicyclopentadiene may be present in all layers but to an amount that is less than 20%, such as less than 15%, in each layer. Having an amount of dicyclopentadiene hydrocarbon resin in an amount that is above 20 % in a single layer may lead to a decrease in tear resistance of the film.

As an example, the film may comprise at a first outer layer, a second outer layer, and a core layer arranged between said first outer layer and said second outer layer; wherein said outer layers comprises linear low-density polyethylene (LLDPE) and said dicyclopentadiene hydrocarbon resin. The core layer may comprise low density polyethylene (LDPE).

In embodiments, no single layer of the multilayer film comprises more than 20 % of said dicyclopentadiene hydrocarbon resin. As an example, all layers of the film comprise the dicyclopentadiene hydrocarbon resin and no single layer of the multilayer film may comprise more than 20 % of the dicyclopentadiene hydrocarbon resin.

As an example, the dicyclopentadiene hydrocarbon resin may be at least 90 % hydrogenated.

As a second aspect of the invention, there is provided the use of a film for sealing a casting mould in an infusion moulding process, wherein the film is comprising polyethylene at a content of 60-90 % by weight of the film, wherein the polyethylene is selected from linear low-density polyethylene (LLDPE) and low-density polyethylene (LDPE) and combinations thereof, and a dicyclopentadiene hydrocarbon resin at a content of 3-20 % by weight of the film.

The film may be a film as discussed in relation to the first aspect above.

As a third aspect of the invention, there is provided the use of a film as a vacuum bag for infusion moulding, wherein the film comprises polyethylene at a content of 60-90 % by weight of the film, wherein the polyethylene is selected from linear low-density polyethylene (LLDPE) and low-density polyethylene (LDPE) and combinations thereof, and a dicyclopentadiene hydrocarbon resin at a content of 3-20 % by weight of the film.

The film may be a film as discussed in relation to the first aspect above.

### Brief description of the drawings

The invention will hereinafter be described in detail by reference to exemplary embodiments as illustrated in the following drawings, in which:
Fig. 1 is a schematically illustrates, in cross-section, a multilayer film that may be used in embodiments of the present invention.
Fig. 2 is a schematic illustration of a production line for producing a film that may be used in embodiments of the present invention.
Figs. 3a and 3b are schematic illustrations of an infusion moulding system used in an infusion moulding process.

### Detailed description

Preferred embodiments of the invention will now be described in more detail. The invention may, however, be embodied in many different forms and should not be construed as limited to the embodiments set forth herein; rather, these embodiments are provided for thoroughness and completeness, and fully convey the scope of the invention to the skilled person.

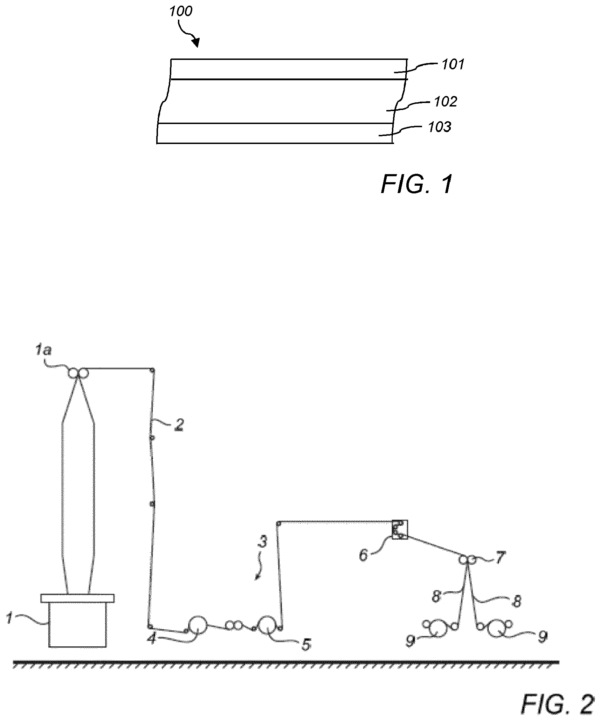

Fig. 1 schematically illustrates, in cross-section, a film that may be used in the method of forming a moulded article according to the present disclosure. This film may thus be used for sealing a casting mould in an infusion moulding process. Thus, the film may be used as a vacuum bag for infusion moulding.

The film 100 is a multilayer film comprising three layers: a first outer layer 101, a middle layer or core layer 102, and a second outer layer 103. The first and second outer layers are arranged on opposing sides of the core layer, and in this embodiment having only three layers, are in contact with the core layer while each outer layer forms an exterior surface of the film. The outer layers 101, 102 may be referred to as outermost layers or skin layers. However, in embodiments having more than three layers, e.g. five or seven layers, additional skin layers may be provided outwardly of the outer layers 101, 103 in relation to the core layer. Alternatively, or additionally, additional layers may be provided in the form of additional core layers, e.g. on opposing sides of the core layer 102 but in between the outer layers 101, 103.

The layers 101, 102, 103 may have the same or different composition. Each of the layers 101, 102, 103 may comprise, as a base material, a polyethylene or a blend of polyethylenes, having a density of up to 0.930 g/cm³, such as from 0.860 to 0.930 g/cm³ or to 0.925 g/cm³. The polyethylene or blend of polyethylenes may include virgin polyethylene material such as metallocene catalyzed LLDPE (mLLDPE) or Ziegler-Natta catalyzed LLDPE (znLLDPE), or recycled polyethylene material, which may comprise a blend of LLDPE and LDPE. The outer layers 101, 103 may contain mLLDPE as base material. The core layer(s) may contain as base material a blend of LLDPE and LDPE obtained from recycled polyethylene.

Linear low-density polyethylene ("LLDPE") comprises, in polymerized form, a majority weight percent of ethylene based on the total weight of the LLDPE. LLDPE can be an interpolymer of ethylene and at least one ethylenically unsaturated comonomer. The comonomer can be a C3-C20 α-olefin. Alternatively, the comonomer can be a C3-C8 α-olefin. The C3-C8 a-olefin can be selected from propylene, 1- butene, 1-hexene, or 1-octene. The LLDPE used in the present invention may be selected from the following copolymers: ethylene/propylene copolymer, ethylene/butene copolymer, ethylene/hexene copolymer, and ethylene/octene copolymer. In a further embodiment, the LLDPE is an ethylene/octene copolymer.

LLDPE typically has a density in the range from about 0.890 g/cm³ to about 0.940 g/cm³, or from about 0.91 g/cm³ to about 0.94 g/cm³. LLDPE may have a melt index (MI) from about 0.1 g/10 min to about 10 g/10 min, or about 0.5g/10 min to about 5g/10 min.

LLDPE can be produced with Ziegler-Natta catalysts, or single-site catalysts, such as vanadium catalysts and metallocene catalysts (mLLDPE). In an embodiment, the LLDPE is produced with a Ziegler-Natta type catalyst. LLDPE is linear and is different than low density polyethylene ("LDPE") which is branched or heterogeneously branched polyethylene. LDPE has a relatively large number of long chain branches extending from the main polymer backbone. LDPE can be prepared at high pressure using free radical initiators, and typically has a density from 0.915 g/cm³ to 0.940 g/ cm³.

The film may contain, as a whole, polyethylene a content of 60-95 % by weight of the film, for instance from 70 to 90 %, or from 75 to 88 %. In embodiments, any one layer 101, 102 or 103 may contain from 40 to 99 % of polyethylene base material having a density of 0.930 g/cm³ or less, such as 0.860-0.930 g/cm³. The film may contain mLLDPE at a content of from 20 to 90 % by weight of the film. In embodiments, the film may contain mLLDPE at a content of from 20 to 40 % by weight of the film, and regranulated polyethylene material at a content of from 20 to 75 % by weight of the film.

In addition to a polyethylene base material, at least one layer of the film 100 contains a barrier additive, which in this embodiment is a dicyclopentadiene hydrocarbon resin. In an embodiment, the core layer 102 contains a dicyclopentadiene hydrocarbon resin. In another embodiment, each of the layers 101, 102, 103 contains a dicyclopentadiene hydrocarbon resin. The total content of the dicyclopentadiene hydrocarbon resin is typically from 3 to 20 % by weight of the film. Where the dicyclopentadiene hydrocarbon resin is present in more than one layer, the content of the dicyclopentadiene hydrocarbon resin may be the same in each layer, or the content may be different in the different layers. In an embodiment, the outer layers 101, 103 may be free of dicyclopentadiene hydrocarbon resin. In embodiments of the film having more than three layers, any skin layer may be free of dicyclopentadiene hydrocarbon resin.

Dicyclopentadiene hydrocarbon resins are known and may be obtained e.g. by from thermal polymerization of olefin feeds rich in dicyclopentadiene (DCPD), or by other means e.g. as described in WO 98/55537 A1. The dicyclopentadiene hydrocarbon resin may be provided in the form of a masterbatch mixed with polyethylene, such as LLDPE. Preparation of a masterbatch is known and is described e.g. in WO 98/55537 A1. Masterbatches containing dicyclopentadiene hydrocarbon resin are commercially available.

The dicyclopentadiene hydrocarbon resin may originate from thermal cracking of hydrocarbons, such as naphtha. The hydrocarbon may be a higher hydrocarbon, such as a hydrocarbon having 5-12 carbon atoms, such as 6-12 carbon atoms. The dicyclopentadiene hydrocarbon resin may be produced by fractionating C6-C12 products produced in the process of ethylene manufacturing.

The dicyclopentadienes of the dicyclopentadiene hydrocarbon resin may comprise less than 50 %, such as less than 20 %, such as less than 10 %, such as less than 5 %, of polydicyclopentadienes (PDCPD). As an example, the dicyclopentadiene hydrocarbon resin may be free of poly-dicyclopentadienes (PDCPD).

The dicyclopentadiene hydrocarbon resin for use in the present invention may have a softening point in the range of from 100 to 140 °C, or about 140 °C. The dicyclopentadiene hydrocarbon resin may be at least partially hydrogenated, for instance at least 90 % hydrogenated. In embodiments, the dicyclopentadiene hydrocarbon resin may be at least 95 %, 99 %, or fully hydrogenated. The dicyclopentadiene hydrocarbon resin may be provided in the form a masterbatch e.g. blended with polyethylene.

One or more of the layers of the film may comprise a pigment. Suitable pigments for use in polyethylene films are known to persons of skill in the art and include, for instance, titanium dioxide and carbon black. Different layers of the film may contain different pigments and/or amounts of pigment.

The film may optionally contain a UV stabilizer, present in one or more of the layers, e.g. in outer layer 101, and optionally in each of the layers 101, 102, 103. By the term "UV stabilization" is meant protection of a material from the long-term degradation effects from light, most frequently ultraviolet radiation (UV). A UV stabilizer may be advantageous for preventing chain reactions caused by e.g. radicals within the polyolefin layer(s) of a prestretched polyethylene film.

The film may optionally contain other conventional additives, such as fillers, slip agents, tackifiers, processing aids, nucleating agents, and the like.

The film 100 may be used for sealing a casting mould in an infusion moulding process. For this purpose, certain mechanical properties are desirable or required. The film may have one or more of the following properties: an Elmendorf tear strength (machine direction, MD) of at least 400 cN, preferably at least 500 cN; an Elmendorf tear strength (transverse direction, TD) of at least 1500 cN, preferably at least 2000 cN; a strength at break (MD and/or TD) of at least 17 MPa, preferably at least 23 MPa; an elongation at break (MD) of at least 250 %, preferably at least 500 %; an elongation at break (TD) of at least 250 %, preferably at least 500 %; and a dart resistance of at least 200 g, preferably at least 400 g.

Films for sealing a casting mould typically have a thickness in the range of from 70 to 180 µm, such as from 90 to 130 µm, or from 100 to 120 µm, or about 110 µm.

Furthermore, as discussed above, the film may be a multilayer film, such as a multilayer film comprising two outer layers sandwiching at least one core layer. As an example, the multilayer film may consist of a single core layer sandwiched between two outer layers (skin layers). The at least one core layer of the film may have a thickness that is between 30-70% of the whole film thickness. For example, the at least one core layer may have a thickness that is between 30-90 µm, such as between 50-70 µm, such as about 60 µm, whereas the outer layers each may have a thickness that is between 10-40 µm, such as between 15-25 µm or between 25-35 µm. The outer layers may have the same thickness or have different thicknesses.

In embodiments, the film may be prestretched. The expression "prestretched film" means that the film is stretched in the longitudinal direction during the film production process before being wound to a roll. Stretching is typically performed in a prestretch unit of the production line and involves passing the film between two or more stretching rollers rotating at different speeds. The prestretching may preferably be performed directly after the extrusion or film blowing steps, while the film is still hot. The degree of prestretching is intended to mean the difference in speed, in percent, between the stretching rollers in the prestretch unit. The difference in speed corresponds to the elongation of the prestretched film between the stretching rollers in the prestretch unit.

According to some embodiments, a prestretched polyethylene film may have a longitudinal degree of prestretching above 70%. The longitudinal degree of prestretching of the prestretched polyethylene film may for example be between 70% and 150%, such as between 70% and 125%, between or 70% and 100%. According to some embodiments, a prestretched polyethylene film may have a longitudinal degree of prestretching between 70% and 85%, preferably between 71% and 79%, preferably between 73% and 77%, preferably about 75%. According to some embodiments, the prestretched polyethylene film has a remaining longitudinal elongation capability of at least 320%, preferably at least 340%, as determined according to ASTM D882.

The term elongation capability as used herein means the elongation percentage at break, as measured in accordance with the ASTM D882 standard, wherein a strip of film with a width of 20 mm, clamped between two clamps at a distance of 50 mm from each other is stretched at a rate of 500 mm/min until the film breaks. At least five strips of the film must be measured, and the elongation capability corresponds to the mean value of the measurements.

According to some embodiments, the stress required in order to stretch the prestretched polyethylene film by 70% in the longitudinal direction is less than 19 MPa, preferably less than 18 MPa, as determined according to ASTM D882. The stress required in order to stretch the prestretched film by 70% in the longitudinal direction can be read from the tensile strength graph obtained when measuring the elongation percentage at break in accordance with the ASTM D882 standard as described herein. At least five strips of the film must be measured, and the stress at 70% elongation corresponds to the mean value of the measurements.

According to an embodiment, at least one outer layer, or if present, a skin layer, of the film 100 may comprise a soft polymer. A soft polymer may provide a relatively soft surface to the outer surface of the film which may increase friction and reduce slip in a direction substantially parallel to the film surface. A soft polymer may particularly be advantageous in a stretch wrap film, which in use is wrapped with an overlap such that the film may adhere, or cling, to itself. By the term "cling" is meant the ability of a material to adhere to itself or an adjacent object. The adjacent object may be a layer of the same or a different film.

According to an embodiment, the film may comprise a tackifier. By the term "tackifier" is herein meant an agent that provides cling to a film. Such an agent may be added to a layer of the polyethylene film in order to increase the cling of the layer. For instance, a tackifier may be a soft polymer, or a migrating tackifier. A tackifier thus serves to increase the cling of the polyethylene film, in particular, one or both of the outer layers or skin layers.

According to an embodiment, the tackifier is a migrating tackifier. By the term "migrating tackifier" is herein meant a tackifier which is soluble in the film material, e.g. in polyethylene. If a migrating tackifier is added to a film (or film layer) in an amount exceeding the solubility level of the film (or film layer), the excess can migrate within the film material to the film surface (including also migrating from a first layer to and through another layer, when the first layer has been saturated with the migrating tackifier). A migrating tackifier may thus provide an adhesive surface which increases the friction in a direction substantially perpendicular to the film surface. A migrating tackifier may be advantageous when the film is e.g. wrapped, such that an exterior layer of a first portion of the polyethylene film adhere, or cling, to an exterior layer of a second portion of the same, or a different, polyethylene film.

According to an embodiment, the migrating tackifier is present at a content of from 1 to 15% by weight based on the total weight of the core layer. The content of migrating tackifier added to the at least one core layer typically exceeds the content of migrating tackifier required to saturate the at least one core layer with regard to the migrating tackifier. The content required to saturate the at least one core layer may depend on the content of polyethylene and other polyolefins, in which the migrating tackifier is soluble, in the at least one core layer.

According to an embodiment, the film is produced by a blown film process, known to persons of skill in the art. In embodiments where the film is a multilayer film, the film may be a coextruded blown film comprising at least two layers, and typically at least three layers.

A monolayer or multilayer polyethylene film according to embodiments of the invention may be produced by a manufacturing process involving the following steps:
a) providing at least a first extrudible composition comprising polyethylene having a density of 0.930 g/cm³ or less;
b) providing a dicyclopentadiene hydrocarbon resin;
c) mixing dicyclopentadiene hydrocarbon resin with said first extrudible composition;
d) optionally providing one or more additional extrudible compositions comprising polyethylene having a density of 0.930 g/cm³ or less;
e) optionally mixing dicyclopentadiene hydrocarbon resin with said additional extrudible composition;
f) extruding the first composition obtained in step c) to form at least one first layer;
g) optionally extruding the at least one additional extrudible composition of step d) or step e) to form at least one outer layer on adjacent the first layer.

The first layer may be a core layer, and the at least one additional extrudible composition, optionally mixed with dicyclopentadiene hydrocarbon resin, may form one or more additional layers, such as two outer layers sandwiching the core layer. For instance, a second extrudible composition, optionally mixed with dicyclopentadiene hydrocarbon resin masterbatch, may form an outer layer 101 as described above. A third extrudible composition, optionally mixed with dicyclopentadiene hydrocarbon resin may form a second outer layer 103 as described above.

The steps of extruding the first extrudible composition to form a first layer (e.g. core layer) and the one or more additional extrudible compositions to at least one outer layer, respectively, may be performed separately from each other e.g. by monoextrusion, or simultaneously e.g. by coextrusion. Typically, the multilayer film is prepared by co-extrusion, using one extruder per layer simultaneously. Monoextrusion and coextrusion are techniques generally known to the person skilled in the art.

Optionally, several extrudible compositions may be provided to form a plurality of core layers, at least one of which is mixed with the dicyclopentadiene hydrocarbon resin masterbatch. The step of extruding the first composition obtained in step a) to form at least one core layer may imply that the first composition is extruded to a single core layer or to multiple core layers. Typically, in the case of multiple core layers, the multiple core layers are extruded simultaneously by coextrusion and adhere to each other due to substantially identical chemical properties.

The dicyclopentadiene hydrocarbon resin may be provided in the form of a masterbatch mixed with polyethylene, such as LLDPE. The masterbatch may be mixed with the first extrudible composition and optionally with one or more additional extrudible composition(s) as described above. Preparation of a masterbatch containing a hydrocarbon resin derived by thermally polymerizing olefin feeds rich in dicyclopentadiene (DCPD) is known and is described e.g. in WO 98/55537 A1. Masterbatches containing dicyclopentadiene hydrocarbon resin are also commercially available.

A blown film production line is schematically depicted in Fig. 2. A film composition as described above is extruded from a blow extruder 1 to form a blown film bubble that is advanced through primary nip rollers 1a. The nip roller nips together the blown film. From the primary nip rollers, the tubular film 2 is passed via guide rollers to a stretch unit 3, where stretching is performed between two rollers, first draw roller 4 and second draw roller 5, having different speeds. The stretch unit 3 may be omitted, in which case the film is not prestretched.

Next, the tubular film is passed to a dividing station 6 where the edges of the film 2 may be cut to provide two individual sheets of film. Next, the film 2 is passed to the secondary nip rollers 7 where the individual sheets of film 8 may be separated. Each film sheet 8 may optionally pass through a second dividing station (not shown) where the sheet may be divided longitudinally into two or more parallel sections of desired width. Finally, the film sheets, or film sheet sections, are wound onto the winders 9. In embodiments of the invention where the edges of the tubular film are not cut in the dividing station 6, the tubular film is typically wound onto one of the winders 9.

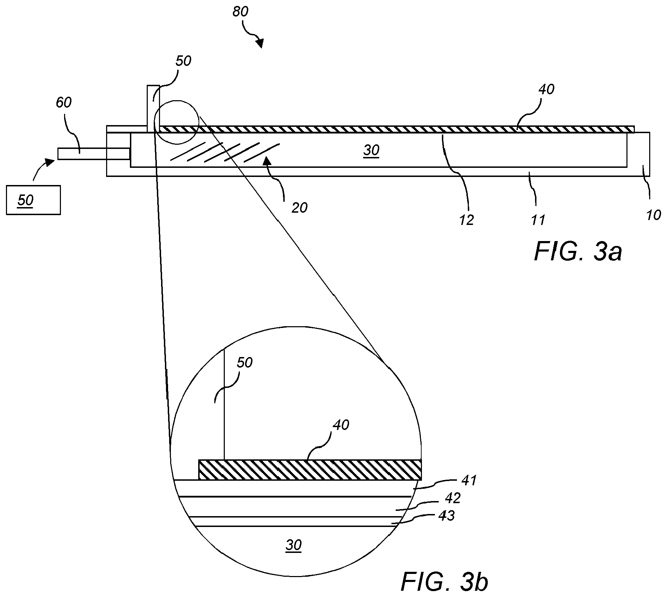

Fig. 3a schematically illustrates an infusion moulding system 80 in which the method of the present invention may be performed. The method is in the illustrated embodiment a vacuum assisted casting process, such example a resin casting process, in which a casting mould 10 is used. The casting mould 10 is a one-sided casting mould with internal walls having the shape of the article to be produced. Thus, as seen in Fig. 3a, the casting mould 10 comprises a lower closed bottom surface 11 and an opening 12 on the upper surface. Before introducing the matrix material, the opening 12 is sealed using a film as discussed in relation to Fig. 1 above, to form a space 30 within the casting mould 10. As an example, a sealing tape or vacuum bagging tape (not shown) may be used to assist fastening of the film 40 to the casting mould 10. The formed space 30 within the casting mould has thus substantially the shape of the article to be casted. The film 40 thus prevents outside air from entering the formed space 30, and thus function as a vacuum bag in the infusion moulding process.

The casting mould 10 may be of a rigid material, such as plastics, metals or composite materials. Further, the mould 10 may be heatable and contain heating means (not shown) for heating the matrix material that is introduced during the infusion moulding process. The heating means may for example comprise resistance thermal elements, tubes or channels for a heated liquid medium.

After sealing the sealing said casting mould 10 with the film 40 to form the space 30 within the casting mould 10, vacuum is created in the space 30, thereby forming a vacuum space 30. In this infusion moulding system 80, valve 30 is used to drawing out air from the sealed space 30 to create vacuum or underpressure in space 30. A vacuum device, such as a vacuum pump or vacuum reservoir, may be connected to the valve 50 for creating a vacuum inside the sealed space 30.

Creating a vacuum in space 30 refers to creating vacuum or at least partial vacuum or underpressure in space 30. The created vacuum is at a level such that matrix material, such as liquid matrix material, 50 may be drawn into the formed vacuum space 30. As an example, the vacuum may be at least -0.9 bar (NTP), such as -0.98 bar, such as close to -1 bar.

Thus, ambient air or atmospheric air from the outside may compress the film 40 down towards the lower surface 11 of the casting mould 10 when vacuum space 30 is created.

Matrix material 50 is then introduced into the formed vacuum space 30. In this example, this is achieved using duct 60, which is arranged to guide a liquid matrix material into the vacuum space 30. Thus, there may also be a valve arranged within duct 60 for holding the formed underpressure or vacuum in vacuum space 30. The matrix material 50 is usually in liquid form, such as in the form of a resin, and is prepared prior to use e.g. in a container before being introduced into the vacuum space 30. Vacuum or underpressure is thus used to transfer the matrix material 50 into the vacuum space 30.

As illustrated in Fig. 3a, reinforcement material 20 has been arranged within the casting mould 10 before introducing the matrix material 50.

After introducing the matrix material 50, this is cured within the casting mould to obtain the moulded article. The curing may for example be achieved using an increased temperature, such as increasing the temperature using heating means (nor shown) arranged within the casting mould 10.

As discussed above, the film 40 is used to seal the casting mould such that a vacuum and underpressure may be formed in the space within the mould. However, further material layers may be arranged over the opening 12 in addition to the film 30. This is illustrated in Fig. 3b, which is a close-up view of a part of the film 30 arranged over the opening 12 of the casting mould 10. As illustrated in Fig. 3b, the polyethylene-based film 30 may be fastened under a portion of the valve means 50, i.e. part of the valve means 50 may be used to keep the film 30 in place. Further, there is a bleeder fabric 41 arranged under the film 30. This fabric 41 may function as an infusion mesh to assist the flow of matrix material into the casting mould 10 through the reinforcement material 20.

Further, under the bleeder fabric 41, there is a perforated release film 42. Due to the perforations, this film 42 may not stick to the cured matrix material. However, it may allow a flow of matrix material from the bleeder fabric 41 to the reinforcements 20 when introducing the matrix material 50 into the vacuum space 30. The perforated release film 42 may for example comprise polyethylene.

There is also a buffering fabric (peel ply) arranged under the release film 42. This fabric is arranged for absorbing excess matrix material from the infusion process

### Examples

An exemplary film were produced using a full scale blown film co-extrusion process. The exemplary film had three layers, formed from first, second and third extrudable compositions having the content as shown in the Table.

**Table. Composition of exemplary film.**

| **Extrud. composition/ Layer** | **Material** | **Content by weight of the respective composition/layer** | **Layer thickness** |
|---|---|---|---|
| A | mLLDPE, density 0.921 g/cm³ | 75 % | 20 µm |
| | other LLDPE | 5-6 % | |
| | Dicyclopentadiene hydrocarbon resin | 9.5 % | |
| | Coloring agent | 7% | |
| | Processing aid | 1 % | |
| | Slip agent | 1% | |
| | UV stabilizer | 1 % | |
| B | Regranulated polyethylene, density <0.930 g/cm³ | 77% | 60 µm |
| | Other LLDPE | 5.5 % | |
| | Dicyclopentadiene hydrocarbon resin | 9.5 % | |
| | Coloring agent | 7% | |
| | UV stabilizer | 1 % | |
| C | mLLDPE density 0.921 g/cm³ | 75 % | 30 µm |
| | Other LLDPE | 5.5 % | |
| | Dicyclopentadiene hydrocarbon resin | 9.5 % | |
| | Coloring agent | 7% | |
| | Processing aid | 1 % | |
| | Slip agent | 1 % | |
| | UV stabilizer | 1 % | |

### Example 1

The exemplary film was used to create a vacuum in an infusion moulding process of composite article comprising glass fibres and a polyester resin.

A little less than 2m² of the film was used for sealing the casting mould. It was found that there was no problem in creating a desirable vacuum pressure for the infusion moulding process.

### Example 2

This test was performed as Example 1, but approximately 10m² of the exemplary film was used. Also in this test, there were no problems in achieving the desired vacuum pressure after sealing the casting mould with the film.

The person skilled in the art realizes that the present invention by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method of forming a moulded article, comprising
providing a casting mould (10);
sealing said casting mould (10) with a film (40) to form a space (30) within the casting mould (10);
creating a vacuum in said space (30), thereby forming a vacuum space (30); introducing matrix material (50) into the formed vacuum space (30); and
curing the matrix material (50) within said casting mould (10), thereby obtaining said moulded article;
wherein the film (40) comprises polyethylene at a content of 60-90 % by weight of the film, wherein the polyethylene is selected from linear low-density polyethylene (LLDPE) and low-density polyethylene (LDPE) and combinations thereof, and a barrier additive at a content of 3-20 % by weight of the film.

2. The method according to claim 1, wherein the casting mould (10) is a one-sided casting mould (10), and wherein sealing said casting mould (10) comprises forming a cover over the open side of the one-sided casting mould (10), thereby forming said space (30).

3. The method according to claim 1 or 2, wherein the moulded article is a reinforced composite article, and wherein the method further comprises arranging reinforcement material (20) within said casting mould (10) before said curing of the matrix material (50).

4. The method according to claim 3, wherein the reinforcement material (20) is arranged within the casting mould before introducing the matrix material (50).

5. The method according to claim 3, wherein the reinforcement material (20) is introduced in admixture with the matrix material (50).

6. The method according to any one of the preceding claims, wherein the film (40) is a multilayer film comprising at least a first outer layer, a second outer layer, and a core layer arranged between said first outer layer and said second outer layer.

7. The method according to any previous claim, wherein the barrier additive is a dicyclopentadiene hydrocarbon resin at a content of 3-20 % by weight of the film, such as at a content of 5-13 % by weight of the film.

8. The method according to claim 7, wherein the dicyclopentadiene hydrocarbon resin is at least 90 % hydrogenated.

9. The method according to any one of claims 7 or 8, wherein the film (40) comprises at least one layer containing a mixture of linear low-density polyethylene and dicyclopentadiene.

10. The method according to any one of claims 6-9, wherein at least two layers of the multilayer film comprises the dicyclopentadiene hydrocarbon resin, preferably at a content of 5-13 % by weight of the film.

11. The method according to claim 10, wherein said outer layers comprises linear low-density polyethylene (LLDPE) and said dicyclopentadiene hydrocarbon resin.

12. The method according to claim 11, wherein the core layer comprises low density polyethylene (LDPE).

13. The method according to any one of the preceding claims, wherein the low-density polyethylene (LDPE) originates from recycled polyethylene.

14. The method according to any one of the preceding claims, wherein the film (40) has a thickness in the range of from 15 to 180 µm.

15. Use of a film (40) for sealing a casting mould (10) in an infusion moulding process, wherein the film is comprising polyethylene at a content of 60-90 % by weight of the film, wherein the polyethylene is selected from linear low-density polyethylene (LLDPE) and low-density polyethylene (LDPE) and combinations thereof, and a dicyclopentadiene hydrocarbon resin at a content of 3-20 % by weight of the film.
